# EUROPEAN PATENT SPECIFICATION

(11) **EP 0 449 942 B1**
(45) Date of publication and mention of the grant of the patent: **17.04.1996**
(21) Application number: 90901143.9
(22) Date of filing: 31.10.1989
(51) Int. Cl.: C02F 1/42

(54) **METHOD FOR SEPARATING METAL IONS USING PHOSPHONIC ACIDS AS COMPLEXANTS**
VERFAHREN ZUR ABTRENNUNG VON METALLISCHEN IONEN MIT PHOSPHONSÄUREN ALS COMPLEXBILDNER
PROCEDE DE SEPARATION DE IONS METALLIQUES EN UTILISANT ACIDES PHOSPHONIQUES COMME COMPLEXANTS

(30) Priority: 01.11.1988 US 265608; 12.05.1989 US 351402
(43) Date of publication of application: 09.10.1991
(73) Proprietor: ARCH DEVELOPMENT CORPORATION, Chicago, Illinois 60637 (US)
(72) Inventor: Horwitz,Earl Philip, Argonne, IL 60439 (US); Gatrone, Ralph Carl, Argonne, IL 60439 (US); Nash, Kenneth LaVerne, Argonne, IL 60439 (US)
(74) Representative: Tubby, David George
(86) International application number: PCT/US89/04857
(87) International publication number: WO 90/05115

(56) References cited:
- EP-A- 0 301 351
- DE-A- 2 026 078
- FR-A- 1 403 179
- SU-A- 0 790 698
- US-A- 2 686 803
- US-A- 3 520 808
- US-A- 3 617 576
- US-A- 3 625 982
- US-A- 3 671 126
- US-A- 3 808 237
- US-A- 3 933 728
- US-A- 3 940 436
- US-A- 4 075 291
- US-A- 4 254 063
- US-A- 4 293 529
- US-A- 4 302 427
- US-A- 4 316 877
- US-A- 4 460 548
- US-A- 4 464 346
- US-A- 4 499 833
- US-A- 4 579 720
- US-A- 4 645 762
- US-A- 4 656 012
- US-A- 4 733 005
- US-A- 4 762 649
- US-A- 4 828 766
- US-A- 4 876 248
- US-A- 4 908 138
- US-A- 4 927 814
- DATABASE WPIL, accession no. 83-781628 [40], Derwent Publications Ltd, London, GB;

## Description

This invention relates to the use of phosphonic acids in separation processes. Inorganic complexing agents and organic complexing agents are well-known and have been used extensively in numerous industrial applications. Generally, complexing agents are used either to help remove metal ions from solution or to help solubilize metal ions in solution. Complexing agents are useful, for example, for clearing waste effluent streams from industrial processing and manufacturing. Another example is the case where one or more environmentally- damaging and/or toxic metal ions, such as radioactive metal ions or metal ions such as cadmium or zinc are intermixed with one or more non-damaging and/or non-toxic metal ions. Selective removal of the cadmium or zinc reduces disposal costs. A further example is the situation where a waste stream contains several different metal ion species wherein only one or two of the metal ions species are sufficiently valuable to justify separation of the metal ion from the waste stream for eventual isolation, regeneration and reuse. In each case, it is desirable to be able to remove selected metal ions and recover them or concentrate them for disposal.

Among the most objectionable byproducts is radioactive waste. The most toxic constituents in radioactive waste streams are the highly radioactive transuranic elements, i.e., the man-made elements heavier than uranium, that have extremely long half-lives and keep nuclear wastes toxic for millions of years. Currently, disposal of such highly toxic radioactive wastes requires converting the radioactive waste into a glass via vitrification, then burying the glass in deep geologic mines or repositories. Millions of gallons of waste that contain transuranic elements are currently awaiting such a disposal treatment.

The variety of complexing agents that have been developed demonstrates that no one particular complexing agent or class of complexing agents has performed satisfactorily across all industries to remove and/or solubilize all metal ions in all applications. Therefore, specific complexing agents were developed to solve particular industrial application problems. However, these specific metal complexing agents, in general, have the disadvantage of small effective pH range, persisting in the environment and/or of adversely affecting the environment. Most cannot be used in very acid media such as media in the pH range of 2 or less.

A known class of chelating agents are the phosphonic acids and diphosphonic acids, but these also can possess disadvantages, in particular excellent thermodynamic stability. Although thermodynamic stability is desirable in industrial compounds, such stability may be a definite disadvantage after the complexing action is no longer desirable as when recovery of the complexed metal from solution is required.

We have now discovered phosphonic acids and derivatives thereof which can be of reduced stability and hence can be decomposed easily when their complexing power is no longer needed.

The present invention provides a method for separation of a metal ion in a medium containing said metal ion and a component to be separated therefrom, said component being preferably at least one of a second metal ion and phosphoric acid, and the metal and component being preferably in an aqueous or non-aqueous medium, which method comprises treating said medium with a complexant, which is a phosphonic acid, or salt, ester, thioester or self condensate thereof, said phosphonic acid having one of the following structures, 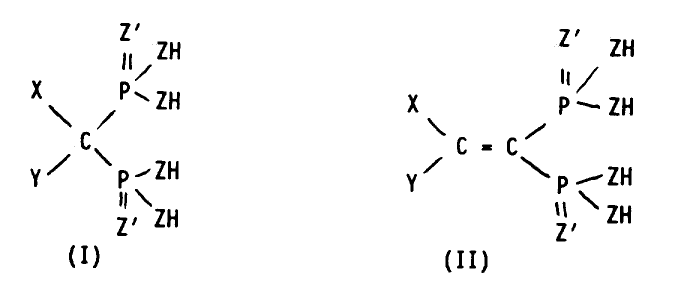 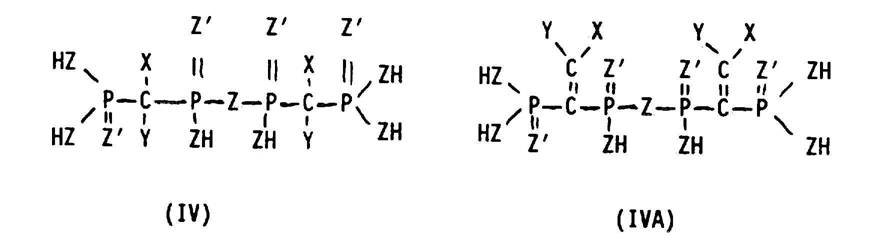 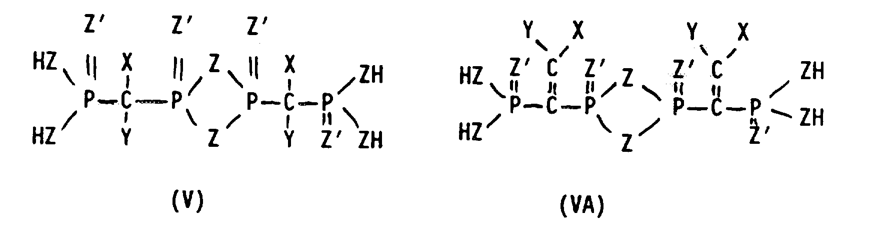 wherein the X and Y substituents are each selected from the group consisting of -H, halogen, Z"H, -CO₂H, -CH₃, -CH₂CH₃, -CONH₂, -CONHR, -CONR₂, -CH₂A, (wherein A is Z"H, NH₂, Cl, Br, F, I, NO₂, CN, OR, SR, or OOCR)
-CH₂-CO-OR, -CH₂-CONHR, -CH₂-CONR₂, -CH₂-CONH₂
-CH₂-COOH, -CH₂-S(O)R, -CH₂S(O₂)R, -CH₂SO₃H, -CH₂SO₂OR, -PO(OH)₂
-CH₂-PZ'(ZH)₂, and -CH(PO₃H₂)₂, wherein
   R is an alkyl group with one to three carbon atoms and
   Z is oxygen or sulphur, Z' is oxygen or sulphur, Z" is oxygen or sulphur;

to produce a water soluble complex from said metal and said complexant, and separating said water soluble complex (preferably in an aqueous medium) from said component, and then decomposing the complex to release the metal ion. Preferably an aqueous medium is added before, with or after the complexant. Advantageously a non-aqueous medium is added if this component is not already dissolved in one and the separation of the complex is by separation of aqueous medium containing the complex from the organic medium containing the component.

After the separation, the metal in the complex is converted into a suitable form eg a substantially organic-free form for recovering or disposal thereof, by decomposing or degrading the complex and/or complexant e.g. under mild conditions to destroy it and release the metal ion, which is preferably removed from the aqueous solution by liquid -liquid extraction or precipitation as an insoluble salt e.g. a phosphate salt. The decomposition is usually performed in aqueous solution preferably at a pH of 10 to that of 7M strong acid e.g. acidic solution, such as that of pH 2 to a pH of 7M strong acid so that preferably the complex contains at least one acidic hydrogen atom. The decomposition can be by heating at moderately elevated temperatures e.g. to about 50°C up to the boiling point of the aqueous medium and/or by oxidation under mild conditions e.g. by contact with an oxidizing agent under mild conditions or electrolytic oxidation. The decomposition time may be at least about 5 min and preferably up to 24 hr. The oxidizing agent is usually a mild one and is preferably free of metals such as transition metals though the latter may be used in catalytic amounts with hydrogen peroxide e.g of 0.01-10 molar percent thereof; halogen free ones are especially preferred. The oxidizing agent is preferably hydrogen peroxide or nitric acid but may be nitrous acid, ozone, peroxycarboxylic acids such as peracetic acid or alkyl hydroperoxides; hypochlorite ion, chlorine dioxide or persulfates may also be used. The amount of oxidizing agent is usually at least half of and preferably at least, stoichiometric such as 1-20 times stoichiometric. In some cases the complex may auto-decompose with a half life of about 5 min to about 30 days; thus auto-decomposition may occur at ambient temperature in a day or two. The degradation to release the metal ion degrades or cleaves the diphosphonic acid compounds into compounds of lower complexing power e.g. at least to mono phosphonic acid compounds and especially further to phosphoric acid and innocuous by-products from the complexant which are usually organic free but may contain one or more carboxylic acids e.g. acetic acid.

Metal complexes formed from the metal and complexant can be represented as follows:

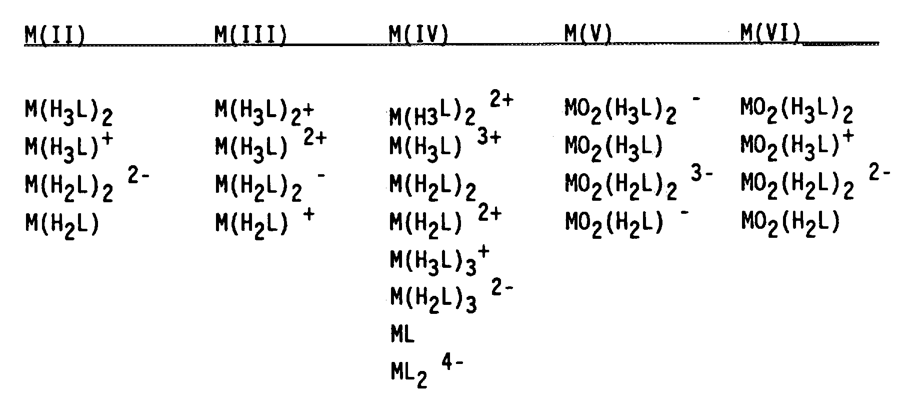

wherein H₄L is one of the tetra basic complexants represented above. Preferably M is an actinide e.g. uranium, plutonium, neptunium or americium, a lanthanide e.g. europium, neodymium or thorium, Sr, Mo, or Zr. However, other metal ions can also be complexed including, for example, Fe, Al, V, Cr Zn, Sc or Ti.

The complexants for use in the present invention unexpectedly possess the properties of being water soluble; forming very strong water soluble complexes with metal ions, including metal ions in the II, III, IV, V and VI oxidation states in moderately alkaline to very acidic media, e.g. at a pH of about 10 to that of 7 M strong acid such as 7M nitric acid. They also have the ability, either before or after complexing with the metal ion, to readily decompose under mild conditions, usually to non-organic and/or essentially environmentally-nondamaging and non-noxious compounds, and release the metal ion.

The complexants form very strong complexes but are preferably themselves thermodynamically unstable e.g. under the mild conditions of oxidation and/or heat or auto-decomposition described above and degrade relatively rapidly to environmentally-nondamaging compounds. Thus the metal ion can be released from the strong complex by destroying the complexing agent.

The term environmentally-nondamaging compound, as used here and hereinafter, refers to environmentally innocuous compounds, like water, carbon dioxide and acetic acid, and to compounds that are fully degraded, such as phosphoric acid or sulfuric acid, and therefore do not pose long term waste and disposal problems. Furthermore, these degradation products can be non-noxious for human consumption in small amounts thereby reducing problems in the use of the complexant in treating materials intended for human (or animal) consumption.

Complexing agents possessing all of these properties are unexpected in the art because normally, in highly acidic media, e.g. of pH 2 up to that of 7 molar strong acid such as nitric acid, metal complexation is inefficient or impossible because most complexing agents are not capable of preferentially complexing with a metal ion as opposed to the hydrogen ions in solution.

Surprisingly, the complexants for use in the method of the present invention outperform most known complexing agents in highly acidic media, and are especially useful in media with a pH of 2 or less e.g. to the pH of about 7M strong acid, e.g. nitric, sulphuric, perchloric or hydrochloric acids. Prior art complexing agents that can be made to form metal complexes at low pH values usually form water-insoluble metal complexes, therefore making the separation of the complexed metal ion from solution more difficult because liquid-solid separation techniques are required, as opposed to the more efficient and economical liquid-liquid extraction techniques. The complexants for use in the method of the present invention are thermodynamically or kinetically unstable, such that either in their uncomplexed state or after complexing with a metal or preferably both, they can be subjected to conditions both to destroy any excess complexing agent in the solution and to release the complexed metal ion back into the solution for easier and more efficient subsequent separation and disposal, or regeneration and recycle, of the metal ion.

Preferred complexants are of formula I and II which are methylene bis phosphonic acids and vinylidene-1, 1-diphosphonic acids and derivatives thereof. The groups X and Y are as defined above but are preferably selected to adjust the susceptibility of the C-P bonds to oxidation and/or thermal degradation and/or autodecomposition. They may also be varied to increase the acidity of the phosphonic acid groups and to increase the water solubility of the complexants and their metal complexes.

While at least one Z, Z¹ and Z^{II} may be sulfur, preferably all are oxygen. The groups X and Y are preferably other than halogen and ethyl and especially do not contain sulfur. Usually at least one and preferably both of X and Y in formula I contain at least one atom other than hydrogen and carbon (if present); this other atom (or atoms) is preferably oxygen but may be nitrogen halogen, or sulfur. Thus when Y is a methyl or ethyl group, X is preferably other than hydrogen being especially a hydroxyl group. Important are those of formula I, wherein X and Y are different and especially those in which X is OH and Y is as defined apart from hydrogen, halogen, methyl or ethyl, but is preferably of formula CH₂A. In other preferred compounds of formula I, Y is a carboxyl or amide group, while X is preferably hydrogen or especially hydroxyl. Important in compounds of formula I and II are those in which X and Y are the same and especially are hydrogen, namely methylene-diphosphonic acid and vinylidene-1,1-diphosphonic acid itself and its salts, and esters especially its monoesters.

Most preferred complexants are those of vinylidene-I,I-diphosphonic acid III and those of formula I wherein X is OH, while Y is CO₂H (VII), CH₂ OH (X), CH₃ (VIII), CH₂ NH₂, CH₂ Cl, CH₂ NO₂ or hydrogen (XX), and wherein X is hydrogen and Y is CH₂OH (XVIII).

It should be noted that, the stability of the acid complexants e.g. of formula II but especially formula I, usually is increased by converting the free acid group into a salt e.g. Group IA metal or ammonium salt especially a sodium or potassium salt. In this way the moderate potential instability in the free acid form may be converted into excellent stability in the salt form. Therefore, converting the acid into a salt retards or prevents autodecomposition of the product such that storage stability is increased. Then, converting the salt form of the compound back to the free acid form allows the user of the diphosphonic compound sufficient time e.g. several days such as at least two to three days to use the compound e.g. in an extraction process before the compound autodecomposes. Thus with compound VII as free acid there is at least 2 to 3 days lifetime, which is sufficient to perform the desired metal ion complexing in a liquid-liquid extraction process to separate metal ions from a waste stream.

The compound 1,2-dihydroxyethane-1, 1-diphosphonic acid, (X) which is of formula I wherein Y is hydroxymethylene and X is hydroxy, is stable indefinitely in the sodium salt form and may be stored in this form. However, in the free acid form, 1,2-dihydroxyethane-1, 1-diphosphonic acid decomposes to water, carbon dioxide and phosphoric acid either by autodecomposition or in boiling HNO₃ or in the presence of hydrogen peroxide.

Vinylidenediphosphonic acid (III) is stable in both the free acid and the salt form, forms very soluble metal ion complexes in acid media but decomposes within hours in boiling nitric acid or by aqueous hydrogen peroxide at moderately elevated temperatures. Vinylidenediphosphonic acid VDPA (III) after complexing with a metal ion e.g. one having an oxidation state of at least 3 can be decomposed to phosphoric acid and other decomposition products including carbon dioxide and water under very mild conditions e.g. with hydrogen peroxide especially at ambient temperature to 100°C e.g. 50-100°C in the presence of salts of vanadium, tungsten, ruthenium or molybdenum. This facile decomposition demonstrates that, after metal complexation, the complexants may be further reduced in stability, such that decomposition is achieved under more mild conditions.

Therefore, to increase the thermodynamic stability of a compound of general structure I, the substituents X and Y are selected such that the diphosphonic acid compound still can autodecompose, but over a longer half life, or such that the diphosphonic acid compound is stable at ambient and slightly elevated temperatures, such as the temperatures encountered during manufacture and during use e.g. liquid-liquid extraction processes, but decomposes upon moderately increased temperatures, such as from about 60°C to about 100°C, and/or in the presence of mild oxidizing agents.

Some of the diphosphonic acids of structural formula I and II are known, in particular 1-hydroxyethane-1,1-diphosphonic acid (VIII) vinylidene-1,1-diphosphonic acid (III) and others are stated to have been made e.g. by nucleophilic addition products of the epoxide (IX) of compound (III) with water (ie. 1, 2-dihydroxyethane-1,1-diphosphonic acid (X)), ammonia, chloride ion and nitrite ion to give respectively compounds of formula I wherein X is hydroxyl and Y is CH₂ A, where A is OH, NH₂, Cl and NO₂ (see US Patent 3705191). The epoxide is stated to react to form complexants of formula I with nucleophilic compounds of formula HA, such as water, hydrochloric acid (HCl), hydrobromic acid (HBr), hydriodic acid (HI), hydrofluoric acid (HF), nitrous acid (HNO₂), hydrogen cyanide (HCN), ammonia, alcohols (ROH), amines (RNH₂ and R₂NH), hydrogen sulfide (H₂S) and mercaptans (RSH), wherein R is an alkyl group including from one to three carbon atoms. The products of the nucleophilic addition usually contain a majority of compounds of formula AH₂C(HO)C(PO₃H)₂, but may also contain a minority of compounds of formula HOCH₂(A)C(PO₃H₂)₂.

Some of the compounds of formula I-VI are believed novel. These include phosphonic acids of formula I -VI as defined above, and salts, esters and thioesters thereof, apart from vinylidene-I,I-diphosphonic acid of formula II, 1, 2-dihydroxyethane-I,I-diphosphonic acid and 1- hydroxyethane-I,I-diphosphonic acid of formula I. Also novel is 1,2-dihydroxyethane-1,1-diphosphonic acid with ³¹P NMR chemical shift in 0.2M D₂O of 14.59 ppm relative to 85% H₃PO₄ or the salt e.g. a sodium salt thereof; this acid or salt is preferably present as a major proportion of a product of which the minor proportion is phosphoric acid or a salt thereof.

A particular example of such a compound of formula I is carboxy-hydroxymethanediphosphonic acid, HOOC(HO)C (PO₃H₂)₂ (VII) which is of formula I wherein X is hydroxyl and Y is carboxyl. This was prepared by a novel synthetic route including the reaction of a mono lower alkyl (e.g. methyl or ethyl) oxalyl chloride and tri lower alkyl phosphite, e.g. (methyl or ethyl phosphite) followed by reaction with a di lower alkyl phosphite e.g. dimethyl or diethyl phosphite. The resulting penta alkyl (e.g. pentaethyl or pentamethyl) ester of VII then was converted to the free acid by de-esterification with trimethylsilyl iodide, (CH₃)₃SiI, to yield the diphosphonic acid compound VII. The diphosphonic acid compound VII demonstrated the acidity, water-solubility and metal ion complexing properties as well as moderate thermodynamic instability as shown by its autodecomposing to carbon dioxide, water and phosphoric acid at room temperature with a half-life of from about two days to about three days.

An important intermediate in the preparation of compounds of formula I is VDPA, or vinylidene - 1, 1- diphosphonic acid (III). We have discovered that this compound can be prepared by dehydration of the commercially available compound 1-hydroxyethane-1, 1-diphosphonic acid (HEDPA VIII).

More specifically, the method comprises dehydrating a tetrasodium salt of 1-hydroxyethane-1, 1-diphosphonic acid by heating; cooling the dehydrated tetrasodium salt of 1-hydroxyethane-1, 1-diphosphonic acid, dissolving the dehydrated tetrasodium salt of 1-hydroxyethane-1, 1-diphosphonic acid in water to form an aqueous reaction mixture, adding methanol until turbid; cooling the aqueous methanol reaction mixture to precipitate the tetrasodium salt of vinylidene-1, 1-diphosphonic acid separating the precipitated salt of VDPA from the aqueous reaction mixture; then acidifying the tetrasodium salt of VDPA to form VDPA.

The tetrasodium salt of the 1-hydroxyethane-1, 1-diphosphonic acid is preferably heated for a time ranging from about 1 hour to about 5 hours e.g. about 2 to about 4 hours at a temperature ranging from about 250°C to about 500°C e.g. about 450°C. The heating is preferably performed under subatmospheric pressure e.g. at 5-100 or 5-50 Torr or an inert atmosphere to reduce decomposition caused by oxygen in the air. The acidification is preferably by ion exchange from an aqueous solution of the tetrasodium salt of VDPA.

The VDPA can then be converted into 1, 2-dihydroxyethane-1,1-diphosphonic acid or other compounds of formula I wherein X is OH and Y is CH₂ A by a further new process.

A novel method for manufacturing 1, 2-dihydroxy-1, 1-diphosphonic acid (DHEDPA) comprises forming an aqueous solution of vinylidene-1, 1- diphosphonic acid e.g. by dissolving it in water or ion exchanging a solution of VDPA salt adding a sufficient amount of a metal oxide catalyst or salt thereof and a peroxy compound to the vinylidene-1, 1-diphosphonic acid solution to form a reaction solution; heating the reaction solution for a sufficient time e.g. about 1 hour to about 5 hours and at a sufficient temperature e.g. about 40°C to 80°C to form the 1, 2-dihydroxyl-1, 1-diphosphonic acid. The DHEDPA may be isolated as a sodium salt thereof. Preferably the VDPA salt is partly neutralized salt e.g. with 1-3 sodium atoms per molecule.

A novel method of manufacturing a complexant having the formula: AH₂C(HO)C(PO₃H₂) or HOH₂C(A)C(PO₃H₂)₂ or a mixture thereof comprises forming a solution of vinylidene-1, 1-diphosphonic acid (VDPA) or a salt thereof in a sufficient amount of solvent preferably by dissolving it in the solvent; adding a sufficient amount of a metal oxide catalyst or a salt thereof and a peroxy compound to the VDPA solution to form a reaction solution; adding a nucleophilic compound of the formula HA to the reaction solution wherein A is a halide, NO₂, CN, NH₂, OH, RNH, R₂N, SH or SR and R is alkyl with one to three atoms; heating the reaction solution containing the nuceophilic compound HA for a sufficient time e.g. about 1 hour to about 5 hours and at a temperature e.g. about 40°C to about 80°C to form the complexant; and then separating the complexant from the reaction solution. The solvent may be water or a polar organic solvent such as dimethyl formamide, dimethyl sulfoxide, dioxane or fully etherified glycols (including polyglycols).

In these two processes the metal oxide catalyst or salt thereof is preferably sodium tungstate though vanadium (V) oxides or molybdenum (VI) oxides or sodium salts thereof may also be used. The peroxy compound is preferably hydrogen peroxide but may be cumene hydroperoxide, t-butyl hydroperoxide, peroxyacetic acid and peroxy benzoic acid; about 1 equivalent of the peroxy compound is used.

When HA is H₂ S or RSH, the product may be oxidized further with hydrogen peroxide to a complexant of formula I which is a sulfoxide, sulfone or sulfonic acid.

In addition, a diphosphonic acid compound of structural formula I or II can be converted into a derivative of the diphosphonic acid, such as being esterified, or thioesterified, either at a phosphonic acid group or at a carboxy-group, if present, with an alcohol, or a mercaptan, containing from one carbon atom to about four carbon atoms. The degree of esterification or thioesterification, such as monoesterification, diesterification or triesterification, can proceed up to any level provided that the diphosphonic acid or diphosphonic acid derivatives of structural formulas I and II retains its water-solubility in the metal complexed state and in the uncomplexed state; can effectively complex with metal ions, including metal ions of oxidation states II, III, IV, V and VI, in moderately alkaline to highly acidic media; and is auto-decomposed and/or is readily decomposed at moderately increased temperatures and/or in the presence of mild oxidizing agents. In addition, the thioderivatives of compounds of structural formulas I and II, the dithiophosphonic acids, such as the thioderivatives of the complexant (X) and of vinylidenediphosphonic acid (III) as depicted in structural formulas XIII and XIV, respectively, also can be used in the method of the present invention, as can various derivatives of these dithiophosphonic acids, such as esters and thioesters.

HOH₂C(HO)C[PS(SH)₂]₂ (XIII)

and

CH₂=C[PS(SH)₂]₂ (XIV)

The manufacture of other diphosphonic acid compounds of structural formula I can be accomplished by other synthetic methods. For example, the preparation of 2-hydroxyethane-I,I-diphosphonic acid HOH₂CCH(PO₃H₂)₂ (XVII), can be achieved by the condensation of the sodium salt of tetraethyl methylenediphosphonate (XVI) with gaseous formaldehyde, followed by de-esterification using trimethylsilyl iodide. The anion XVI can be prepared from methylene dibromide and triethyl phosphite to form diethyl bromo ethylphosphonate which is in turn reacted with the mono sodium salt of diethyl phosphite to form tetraethyl methylenediphosphonate.

Similarly, hydroxymethanediphosphonic acid, HOCH(PO₃H₂)₂ XVII, can be prepared by an Arbusov reaction between triethyl phosphite and phosgene, followed by reduction of the intermediate compound OC(PO₃Et₂)₂ with a suitable borohydride reagent and finally by de-esterification with trimethylsilyl iodide.

Other diphosphonic acid derivatives of formula I-VI having lower acid dissociation constants and forming more stable complexes than the diphosphonic acids and diphosphonic acid derivatives described above can also be used. Such compounds include the mono- and dipyrodiphosphonic acids e.g. of formula IV and V. Examples are bis-[methylene-pyrodiphosphonic acid] and bis-[methylenedipyrodiphosphonic acid] which are compounds of formula IV and V respectively in which X and Y are both hydrogen which can be made by heating the trisodium and disodium salts of methanediphosphonic acid CH₂(PO₃H₂)₂ XIX, respectively, to approximately 300° to 400°C in a vacuum to provide compound IV or compound V respectively.

Compound IV also can form very strong complexes through the pyrophosphonic acid groups. Compound V has a less favourable structure for metal ion complexation and its preparation by pyrochemical means may also give some polymer formation for example of formula (VI) in addition to compound V.

[-OP(O)(OH)-CXY-P(O)(OH)-O-P(O)OH)-CXY-P(O)(OH)-]ₙ VI

The ability of both compound XIX and VI to perform as suitable complexants for use in the method of the invention can be enhanced further by placing a hydroxyl substituent on the methylene carbon. Hydroxyl-substituted IV and V can be prepared pyrochemically from the appropriate sodium salts eg of hydroxymethanediphosphonic acid.

The complexants for use in the method of the invention were tested for their water solubility, for their ability to form highly stable or very strong water-soluble complexes with metal ions, including metal ions in the III, IV and VI oxidation states, in from moderately alkaline to highly acidic solutions, such as 0.1 M HNO₃ for 3⁺ ions and 7 M HNO₃ for 4⁺ ions, and, also for their ability to readily decompose to environmentally-nondamaging substances, such as carbon dioxide, water and phosphoric acid, under conditions described above.

In particular metal complexing ability measurements were made on the degree of lowering of the distribution ratio, i.e., the ratio of metal ion concentration in the organic extraction solvent phase to metal ion concentration in the aqueous solution, of americium III, or europium (III), in extractions from 0.1 M HNO₃ and 0.01 M HNO₃ using bis(2-ethylhexyl) phosphoric acid (HDEHP) as the organic extraction solvent. Thermal degradation tests were performed by heating the complexant in 8 M HNO₃ at 100°C, and followed by analysis via ¹H, ¹³C and ³¹P NMR (nuclear magnetic resonance) spectroscopy. The water-solubility of metal ion complexes formed with the complexants was determined by using macroquantities of neodymium (III), thorium (IV), and uranium (VI), as representatives of trivalent actinides, plutonium IV and neptunium (IV) and actinide (VI) ions, and also in tests with iron (III) and zirconium; these tests were with different complexant to metal ratios, metal ion concentration and pH. Acid strengths as acid dissociation constants pKa values of the complexants were determined by standard potentiometric titration methods.

The complexants may be used in aqueous solution to form a water soluble complex with a first metal ion, and not significantly complex with a second metal ion, which may then be separated from the soluble complex. The separation may be by precipitation of the second metal ion, leaving the first metal complex in solution, or may involve liquid-liquid or ion exchange distribution techniques.

The complexing agents of the present invention can be used as aqueous extraction agents or hold-back agents. They are particularly useful in liquid-liquid solvent extraction processes where they can be used as hold-back agents for improving the selectivity of an organic extraction solvent in removing one or more particular metal ion or other organic extractable component from an aqueous solution that includes a variety of metal ions or a mixture of metal ions and other organic extractable components. The complexed metal can then be released e.g. by decomposition of the complex. The compounds formed by the decomposition of the complexant are often non-organic, easily handled or disposed - of compounds. The released metal ions can be easily extracted for concentration or, depending on concentration and conditions, can be removed as a phosphate salt precipitate. These properties are particularly useful for concentration and disposal of radioactive metals.

Therefore, the present invention allows treatment of chemical solutions, such as aqueous nuclear waste, aqueous feed solution for hydrometallurgical processing, and waste brine solutions from oil recovery, with the complexants to suppress a particular metal ion or metal ions from interfering with the normal processing operations on the solution. In particular, the present invention relates to using such complexants that are stable at normal processing temperatures, but are unstable at moderately elevated temperatures to effect decomposition of the metal ion complex at a predetermined stage in the process.

Accordingly, the complexants for use in the present invention are used in treatment operations to form metal complexes with a particular metal ion species in an industrial solution. Therefore, the desired processing operations can be continued with the metal ion complex being readily degradable under mild conditions at a late stage of the process to release the particular complexed metal ion species back into the industrial solution for eventual recovery or disposal.

Consequently, the present invention allows the treatment of a solution containing at least one metal ion that interferes with the processing of the solution. The treatment involves forming of a water-soluble complex between the interfering metal ion and the complexant, then processing the solution by separating and removing harmful or valuable metal ions from the solution at a temperature below the decomposition temperature of the complexant, then subsequently heating a solution to a sufficiently elevated temperature and/or adding a mild oxidizing agent to decompose the metal complex and the complexant.

A complexant for use in the method of the invention can be used in liquid-liquid extractions or in supported liquid membrane processes to separate metal ion species in solution. It can especially be used as a holdback reagent to improve the selectivity of extraction solvents by strongly complexing with particular polyvalent metal ions, thereby resisting their extraction, and permitting the more selective extraction of other metal ion species (that form less stable complexes with the holdback reagent) from the solution. The metal ion extracted or held back may be the one of special interest. One example of using the complexant as a hold back reagent is a method of treating a high-level nuclear waste stream including americium, curium, plutonium and neptunium ions. In a similar application, oxalic acid is used to preferentially complex the fission products zirconium and molybdenum, thereby increasing extraction solvent selectivity for the americium ion that forms a much less stable oxalato complex than zirconium and molybdenum ions. However, oxalic acid does not effectively complex zirconium and molybdenum ions in solutions having an acidity greater than 2 molar HNO₃. Therefore, the application of oxalic acid as a complexing agent is limited. However, the complexants of the present invention have lower acid dissociation constants (pKₐ values), and are stronger acids, than oxalic acid and are better complexing agents, and their instability to the mild decomposition conditions specified above avoids the subsequent disposal and environmental problems that the more stable complexing agents, e.g., oxalic acid and the aminopolycarboxylic acids, create.

In general terms, when the complexants are used as hold back reagents, the complexant is introduced into an aqueous medium solution, preferably at a pH of about 10 to about the pH of 7 M strong acid, containing a first and second metal ion species to form a soluble metal ion complex with the first metal ion species and extracting the second metal ion species from the solution with an extractant into a medium which is immiscible in the aqueous medium and then the extractant and aqueous medium are separated.

In general, the aqueous immiscible extraction solvents used herein are well-known organic soluble agents commonly used in the type of liquid-liquid extractions as required here. These are different from the aqueous soluble complexants of the invention and are organic compounds such as neutral and acidic organophosphorus compounds, alkyl amines, and quaternary ammonium chlorides. Examples of such extraction solvents are mono(2-ethylhexyl) 2-ethylhexylphosphonic acid, bis(2,4,4-trimethylpentyl) phosphinic acid, tributyl phosphate, trioctyl amine, bis(2-ethylhexyl) phosphoric acid, and octyl(phenyl)-N, N-diisobutylcarbamoylmethylphosphine oxide and mixtures thereof. Other alkyl amines, dialkyl amines, trialkyl amines and organophosphorus acid compounds such as an alkyl phosphonic acid or ester, a dialkylphosphinic acid or ester thereof, an ester of phosphoric acid, or a trialkyl phosphine oxide, also are known as organic extraction solvents. This known class of organic soluble complexing agents can be used alone or in solution in an organic solvent, normally a hydrocarbon solvent.

In an other example, the complexant of the invention is used as a holdback reagent in a cobalt extraction/recovery process. Trivalent iron is a ubiquitous constituent in feed solutions for cobalt, nickel and copper recovery. Consequently, the trivalent iron must be either complexed or precipitated to prevent iron ion interference with the extraction process. The presently available complexing agents either do not function effectively at the acidities normally encountered in the feed stream or they create serious environmental and/or waste disposal problems. Generally the iron ion is precipitated as a hydroxide but precipitation requires a tedious, costly and time-consuming solid-liquid separation. However, the complexants of the invention can selectively complex the iron ion interferant and hold the iron ion in solution, therefore permitting the extraction of cobalt from nickel by standard procedures or extraction of both Co⁺ and Ni⁺ at very low pH values. The complexant then can preferably be destroyed, thereby releasing the iron ion back into solution for a liquid-liquid separation, or for disposal, while precluding any environmental and waste disposal problems associated with the complexant originally used to complex the iron ion. The complexant may also be used to strip the iron into an aqueous solution from an organic solution of the iron with cobalt and/or nickel.

The complexants of the present invention can also be used in the extraction of ⁹⁰Sr (strontium) and ¹³⁷Cs (cesium). from acidic highly radio active waste solutions containing polyvalent metals. The complexant can be used to complex the polyvalent metal ions in 2 M to 3 M HNO₃, therefore significantly improving the selectivity of crown ether extractants for strontium and cesium ions, or the selectivity of strongly acidic organophosphorus extractants for strontium. The use of the complexant considerably diminishes the demands placed on the selectivity of the extraction solvent used in the extraction system.

Thus the first metal ion may be plutonium and/or neptunium or other actinide while the second is americium and/or curium and/or strontium and/or cesium, or the first is Fe or Al and the second Co and/or Cu and/or Ni.

The complexant of the present invention also can be used as a stripping agent for removing extracted metal ions from an organic extraction solvent, or as an extraction solvent cleanup reagent particularly in the fields of nuclear waste processing, by product recovery from nuclear waste and nuclear fuel reprocessing. In this application, an aqueous solution of a complexant of the present invention is used to extract the metal ions from the organic extraction solvent such that the extraction solvent can be reused and the volume of waste material containing the metal ions can be reduced.

In general terms in this stripping operation, metal ions in a non aqueous medium are reacted with the complexant of this invention in an aqueous medium to form a water soluble metal complex, thereby removing metal ions from the non aqueous medium into the aqueous solution and then separating the non aqueous medium and aqueous solution. Examples of suitable non aqueous media are as described for the extractant used in the hold back process.

The complexants enhance the back extraction (Stripping) of all actinides from the extraction solvent used in a liquid extraction method of treating an acidic waste stream from a nuclear facility. The ability of the complexants of the present invention to strongly complex with metal ions especially in strong acid combined with high aqueous solubility of the metal ion complexes, improves the back-extraction efficiency, i.e., stripping efficiency, of the metal ion e.g. all actinides from the organic extraction solvent by the aqueous solution. In addition, the preferred subsequent decomposition of the metal ion complex, and of any free complexant, facilitates subsequent conversion of the metal ion to a more desirable chemical form, such as a glass formed by vitrification of a transuranic element fraction, for efficient disposal. Decomposition of the complexant results in products which do not interfere in forming the glass, or in storing a waste, and generate no additional and difficult to process waste streams.

Furthermore their operation at very acidic pH ranges avoids dilution of the waste stream, which they effectively concentrate. The metals may also be removed from a non aqueous medium supported on a membrane. In general terms, an aqueous solution containing metal ions contacts one side of a porous membrane having two sides and carrying in the pores thereof, an organic soluble complexing agent to extract metal ions from the aqueous solution into the organic complexing agent; the other side of the porous membrane contacts an aqueous solution of the complexant to extract the metals from the organic soluble complexing agent contained in the membrane pores and the aqueous solution is separated from the membrane.

Thus aqueous solutions of the complexants of the present invention can be used in commercially available supported liquid membrane-based modules to strip metal ion contaminants from aqueous solution. Other devices using a porous membrane separating means can also be used. For example the aqueous solution containing uranium is in contact with one side of the porous membrane and the aqueous solution of the complexant is in contact with the other. A known organic extractant e.g. as specified above for use in the holdback process is permeated into the pores of the membrane to carry the metal ions from one side to the other. The aqueous solution of the complexant strips metal ions from the organic extractant in the pores, driving the extraction "reaction" toward removal of metal ions from the solution to be decontaminated.

The complexants of the present invention, because of their unique ability to form metal complexes under highly acidic conditions, can be used in the purification of acids or highly acid solutions. One advantageous use is in the purification of phosphoric acid. Because phosphoric acid is normally commercially made from mined phosphate material (phosphate rock), it is usual that there are various metal ion contaminants present which end up in the phosphoric acid. These include contaminants such as iron and aluminium. To obtain high purity phosphoric acid from the impure aqueous mixture which results from the conversion of phosphate rock to phosphoric acid, several commercial processes utilize an organic solvent to extract the phosphoric acid from the impure aqueous mixture. This leaves most of the metal ions and other impurities behind in the aqueous phase. The phosphoric acid can then be recovered from the organic solvent usually by distillation of the solvent or back extraction of the phosphoric acid with an aqueous medium.

Although substantially pure phosphoric acid is produced by these methods, there is still a carryover of metal ions into the organic phase and when the organic solvent is removed, the metal ions remain in the purified phosphoric acid. When the phosphoric acid is to be used, for example, as food grade phosphoric acid, it is advantageous if substantially all of the metal ions can be eliminated. The complexants of the present invention provide several methods by which this can be accomplished in a simple way using current commercial processing equipment.

The first method of use is to simply introduce the complexant into the impure phosphoric acid in order to act as a "hold back" agent for the metal ions. The complexing agent will act to complex the metal ions giving them higher affinity for the non-organic (or aqueous) phase, thereby having the effect of reducing the amount of metal ion impurities which pass over into the organic phase during the extraction. The remainder of the processing is the same as usual.

A second method, which is related to the first method, involves following the usual method of extraction and then extracting metal ions from the organic phase in an additional step. The first method described above has the advantage of not requiring additional equipment or an additional step. The second method requires a second extraction step which would normally be accomplished in a separate extraction column or mixing vessel. First the impure phosphoric acid is extracted with the organic solvent, as is usual, and then the organic solvent is in turn extracted with an aqueous solution of the complexant of the present invention.

The complexants in the phosphoric acid can usually easily be decomposed either by allowing them to stand and autodecompose or with mild heating or mild oxidizing conditions. These methods may convert the complexant of the present invention into substantially non-noxious products which can be left in the food grade phosphoric acid or removed by simple methods such as being driven off by gentle heating. Not more than a small amount of the complexing agent of the present invention will be likely to pass into the organic phase.

The complexing power of the complexants may also be used in conjunction with cation exchange resins in order to effect purification. Thus a mixture of first metal ions complexed with complexant and second metal ion may be applied to a cation exchange resin in the protonated form and the second metal ion retained while the complexed metal ion is eluted either rapidly or slowly after some degree of retention, depending on its charge; the second metal may then be eluted with strong acid. Particularly in the separation of similar metal ions such as lanthanides or actinides, both metal ions may complex but to different extents at different pHs so once applied to the resin differential elution with solutions of increasingly strong acid concentration is used. An anion exchange resin may be used with retention of anionic first metal complexes and elution of uncomplexed second metal ion and any cationic first metal complexes. In general in these processes an aqueous solution of a first metal ion complexed with the complexant and second metal ion are separated on an ion exchange resin, e.g. one on which at least one of the metals is bound, and at least one other of the metals is separated from the resin.

When the complexants are used under concentration and other conditions wherein a phosphate (or sulphur analog) salt precipitate is formed with the metal ions released by the decomposition, the aqueous phase can easily be recycled. One need only provide a settling tank (or other separation means), remove the aqueous phase and reuse it by adding complexing agent.

The invention is illustrated in the following Examples:

### Example 1

1-hydroxyethane-1,1-diphosphonic acid (HEDPA) VIII) (70% aqueous solution) first was purified by crystallization from an acetic acid solution prepared by adding 3 parts volume of glacial acetic acid to 1 part HEDPA solution.

The tetrasodium salt of HEDPA then was prepared by adding 4 equivalents of 1M sodium hydroxide (NaOH) to the purified HEDPA in water. After stirring for 30 minutes, the aqueous solvent was removed in vacuo at 50°C to provide the solid tetra-sodium salt of HEDPA.

The tetrasodium salt of HEDPA hydrate (240 g) then was introduced into a 6.5cm X 75cm glass tube in two batches. The glass tube was attached to a rotary motor that was set to rotate the tube at the rate of 5 revolutions per minute. A condenser and vacuum attachment then were connected to the rotary motor. After establishing a vacuum of approximately 3.33 kPa (25 Torr), the tube then was inserted into a (7.8 cm) 3 inch tube furnace. The temperature was raised to about 400°C, and the tube was maintained at that temperature for 3 hours.

After cooling the tube to room temperature, the resulting tan-colored solid (180g), including 60% by weight of VDPA, was dissolved in 330mL of water at 95°C. Methanol was added slowly until the hot aqueous solution became turbid. Heating was maintained until the aqueous solution again becomes clear. The warm solution then was covered and, undisturbed, allowed to cool slowly to room temperature. The resulting white solid was isolated by filtration to provide 185.5g of a tetrasodium salt of VDPA. The VDPA salt was greater than 95% pure as demonstrated by ¹H NMR and ³¹P NMR, and ion chromatography.

The free VDPA acid was obtained by solution of the sodium salt and acidic ion exchange as described in Ex2 (a) below. The ³¹P NMR shift of the VDPA in 0.2 MD₂O was 12.11 ppm (relative to 85% H₃PO₄ as external standard). The free VDPA acid decomposed within hours in boiling nitric acid, and in aqueous solution with hydrogen peroxide at 60°C in the presence of sodium vanadate.

### Example 2

(a) A solution containing 36.7 g of the tetrasodium salt of VDPA (II) in 100mL of water was passed slowly through a column containing 133g of BIORAD AG MP-50, an acidic ion exchange resin available commercially from BioRad. After the column was loaded, an additional 100mL of water then was introduced in order to completely elute the mono sodium form of VDPA.

(b) The resulting solution was charged with 1.6g of sodium tungstate and 54ml of 30% hydrogen peroxide, then the solution was warmed to 60°C for 3 hours. After cooling to room temperature, the DHEDPA product (X) was isolated in one of two ways:

Method A: Dilute aqueous sodium hydroxide (NaOH) was added dropwise to the above cooled solution until a pH of 6.2 was attained. The aqueous solvent then was concentrated in vacuo to provide a white syrup-like material. Approximately 50mL of acetone was introduced and the resulting mixture was mechanically stirred for about one hour. The acetone solvent was decanted and another 50mL of fresh acetone was introduced into the mixture. After again decanting the acetone solvent, the DHEDPA salt product (25g, 90% yield, 85% pure) was dried in vacuo at 50°C overnight. The DHEDPA salt product (X) was identified by ¹H NMR and ³¹P NMR. The 15% impurity present consisted of sodium phosphate and sodium pyrophosphate.

Method B: Sodium carbonate (22.2 g) was introduced slowly to the above solution with stirring. The solution volume was reduced by approximately one-half using a rotary evaporator at room temperature. Acetone (200mL) was introduced into the solution, and the resulting mixture then was stirred for about one hour. The acetone solvent was decanted, then the procedure was repeated. The resulting white solid was dried in vacuo at 50°C to provide the DHEDPA salt compound (X) in 90% yield.

The DHEDPA free acid was made from an aqueous solution of the sodium salts from method A or B by elution down a cation exchange resin in the acidic form. The DHEDPA free acid (0.2M in D ₂O) had a ³¹P NMR chemical shift of 14.59 ppm but was contaminated with a minor amount of phosphoric acid (chemical shift 3.10 ppm), both shifts relative to an external standard of 85% H₃PO₄.

The DHEDPA free acid autodecomposed at room temperature with a half life of about 15 days and totally decomposes in about 3 hours in boiling 8M nitric acid and in aqueous solution in the presence of hydrogen peroxide at about 60°C.

### Example 3

Methyl oxalyl chloride (10 ml, 110 mmol) was cooled to 0°C under nitrogen and then trimethyl phosphite (12.8 ml, 100 mmol) was added dropwise thereto over 45 min to give a resultant solution which was allowed to warm slowly to room temperature over a 2 hour period to give the trimethyl ester of oxalophosphonate (98% yield), whose structure was confirmed by ¹³C and ³¹P NMR. The resultant product was dissolved in diethyl ether (30 ml) to give a solution which was cooled to 0°C. To this solution was added dropwise over 2 hours a solution of dimethyl phosphite (9.6 ml, 100 mmol) and di-n-butylamine (1.4 ml, 8.5 mmol) in diethyl ether (50 ml), and then the solution was slowly warmed to room temperature. The ether solvent was evaporated using a stream of nitrogen to leave an oil (26g, 70% yield) of the penta methyl ester of carboxy hydroxymethane diphosphonic acid, whose ¹³C and ³¹P NMR spectra were in accordance with this structure.

To a stirred solution of said ester (5g, 16.3 mmol) in carbon tetrachloride (10ml) cooled to 0°C was added slowly a solution of iodotrimethylsilane (8.2ml, 58.1 mmol) in carbon tetrachloride (10ml), whereafter the resultant solution was vigorously stirred while warming to room temperature. Water (6ml) was introduced and stirring continued for 1 hour to give an aqueous and an organic phase, which were separated. The aqueous phase was washed with carbon tetrachloride (2 x 15 ml). The aqueous phase contained carboxy-hydroxymethane diphosphonic acid (60% yield). The ¹³C and ³¹P NMR spectra were in accordance with the structure with (in the carbon spectrum) a singlet at 161.44 ppm (carboxylate) and a triplet at 19.5 ppm (quaternary methane carbon) (J_{p-c-p}536 Hz) and (in the phosphorus spectrum) a signal at 10.5 ppm, with a contaminant phosphoric acid at 3.10 ppm. (relative to 85% H₃PO₄ as external standard).

The free carboxylic acid decomposed at room temperature with a half life of about 2 to about 3 days.

### Example 4

The complexants are particularly useful to "clean" the solvents used in the TRUEX process for disposal of radioactive waste.

A TRUEX process solvent solution containing 0.2 molar octyl (phenyl)-N,N- diisobutylcarbamoylmethylphosphine oxide and 1.2 molar tributyl phosphate in dodecane contained uranium (VI), plutonium (IV) and americium (III). Aliquot portions of the solution were contacted at 25°C with aqueous solutions of nitric acid of different concentrations in the presence and absence of VDPA. In each case the organic and aqueous solutions were shaken together and then the phases separated and analyzed for the U, Pu and Am to determine the distribution coefficients between the organic and aqueous phases. The results were as follows:

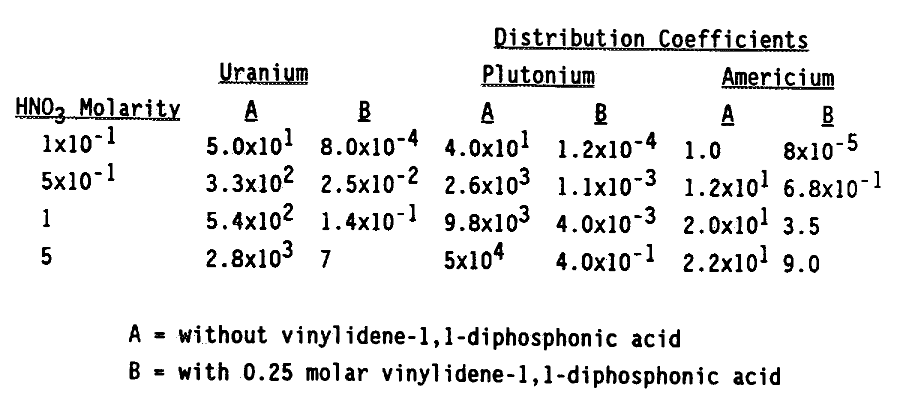

With the aqueous phases of 10⁻¹ and 5 x 10⁻¹ M HNO₃ and VDPA, the VDPA was very efficient in stripping the metal ions from the organic solvent.

With the aqueous phase of 1M HNO₃ and VDPA, the VDPA was selective in stripping the U and Pu and leaving the Am in the organic phase. With the aqueous phase of 5M HNO₃ and VDPA, the VDPA preferentially stripped the Pu over the U and Am.

After separation the aqueous phases containing the nitric acid and VDPA and VDPA complex were boiled overnight to decompose the complex and complexing agent to produce phosphoric acid, carbon dioxide and water and to release the metal ions.

### Example 5

The processes of Example 4 were repeated with a TRUEX process solvent solution as in Example 4 which had been hydrolytically and radiolytically degraded. The degraded solvent solution containing Am, U and Pu as before was contacted at 25°C with an aqueous 0.25M solution of VDPA in a volume volume ratio of 5:1 to give an organic and an aqueous strip phase, which were separated and analyzed. The contacting, separation and analysis procedures were then repeated twice more with fresh portions of the aqueous VDPA solutions to give two further aqueous strip phases. The distribution coefficients were determined as follows.

| Strip No | D_{Am} | D_{Pu} | Dᵤ |
|---|---|---|---|
| | | | |
| 1 | 3.4 x 10⁻ | 6.9 x 10⁻⁴ | 6.4 x 10⁻³ |
| 2 | 1.8 x 10⁻ | 1.5 x 10⁻³ | 6.5 x 10⁻³ |
| 3 | 6.9 x 10⁻³ | - | 6.9 x 10⁻³ |
| overall reduction in nuclide concentration | 3 x 10³ | 4 x 10⁴ | 3 x 10⁴ |

The process was thus very efficient at stripping the nuclide contaminants from the degraded TRUEX process solvent solution to leave a purified solvent solution.

After the separation, the aqueous phases were decomposed to release the metal ions by addition of hydrogen peroxide in 2 portions to give 1M solutions on each occasion and a small amount of sodium vanadate, and heating at 60°C for 16 hour. The VDPA complex decomposed to release the metal ions and produce phosphoric acid, water and carbon dioxide.

### Example 6

Aqueous solutions of the complexant described in this application are useful as stripping agents in a supported liquid membrane-based process for removal of uranium contaminants from groundwater. In this process, groundwater containing 10⁻⁴ M uranium was acidified to pH 2 by addition of small amounts of sulfuric acid and passed through porous polypropylene hollow fibers in a supported liquid membrane module. The pores of the membrane are filled with 0.1. M bis(2,4,4-trimethylpentyl) phosphinic acid in n-dodecane. The stripping solution, containing 0.25 M VDPA, is circulated outside the hollow fibers and interacts with the organic extractant in the pores to remove metal ions therefrom.

Uranium levels in the groundwater were found to be reduced to 10⁻⁸ M. The strip solution was found to contain 10⁻¹ M uranium. The VDPA was destroyed by mixing the strip solution with excess aqueous hydrogen peroxide and a small amount of sodium vanadate and heating the strip solution to 60 to 70°C overnight (about 15 hours) to produce a uranium-containing product for recovery or disposal, as well as carbon dioxide, water and phosphoric acid.

### Example 7

In the same general manner as described in Example 4, an aqueous strip solution of 0.25 M VDPA and 0.25 M in oxalic acid is made containing 0.005 M Pu (IV). To this solution was added hydrogen peroxide to a concentration of 1M and sodium vanadate to a concentration of 0.002 M. The solution obtained was heated for 1.5 hours at 80°C, then a further equal amount of hydrogen peroxide was added and the heating continued for a further 1.5 hours at 80°C to give a voluminous white precipitate. On further heating the white precipitate changed to a granular light pink solid. Radiometric assay of the supernatant solution showed that 99.6% of the Pu precipitated. The VDPA complex had decomposed to release Pu ion which formed insoluble Pu oxalate.

### Example 8

In the same general manner as described in Example 4 a solution of neodymium (III) in the TRUEX process solvent was treated with an aqueous strip solution of VDPA to strip out the Nd to give organic phase which was separated from an aqueous solution of 0.2M Nd and 0.25M VDPA. To the latter aqueous solution was added sodium vanadate (0.002M) and hydrogen peroxide to a concentration of 1M, and the solution obtained heated for 1.5 hours at 80°C, prior to addition of a second equal amount of hydrogen peroxide and further heating for 1.5 hours at 80°C. A granular violet coloured precipitate formed; a further 6 hours heating did not appear to produce any more precipitate. The precipitate was separated and identified as NdPO₄.½H₂O, while analysis of the supernatant solution showed that 98% of the Nd had precipitated.

### Example 9

An organic phase containing Co (II) and Fe (III) and 2-ethylhexyl 2-ethylhexylphosphonate in dodecane is contacted with an aqueous solution of 1,2-dihydroxyethane -1,1-diphosphonic acid (DHEDPA) at 25°C to give an organic phase containing Co (II) and an aqueous solution phase containing an Fe (III) complex of DHEDPA which were separated.

The aqueous solution containing the Fe (III) DHEDPA complex at a pH of less than 2 was allowed to stand at room temperature for 1 week during which time some precipitate formed and then left for a further 3 weeks in which time more precipitate formed. Analysis of the supernatant solution showed no sign of the presence of any DHEDPA confirming its decomposition, while the precipitate was assumed to be ferric phosphate.

### Example 10

The acid dissociation constants (pKₐ) of the complexants below were obtained by potentiometric titration. The TABLE below summarizes the constants (pKₐ) of three substituted diphosphonic acids of the present invention determined in 2M ionic strength (NaNO₃) and compared to those of oxalic and phosphoric acids determined in 1M ionic strength solution.

| | pK₁ | pK₂ | pK₃ | pK₄ |
|---|---|---|---|---|
| Oxalic Acid | 1.04 | 3.55 | --- | --- |
| Phosphoric Acid | 1.70 | 6.46 | 10.80 | --- |
| HEDPA (VIII) | 1.53 | 2.16 | 6.18 | 9.09 |
| VDPA (III) | 1.41 | 2.05 | 5.98 | 8.58 |
| DHEDPA (X) | 0.91 | 1.59 | 5.82 | 7.97 |

The data in the TABLE demonstrates that the diphosphonic acids of the present invention are strong acids, particularly DHEDPA, the compound of structural formula (X). Low acid dissociation constants are important for the complexants of the present invention for them to act as effective metal ion complexing agents at low pH values.

Metal ion complexation with these complexants were investigated using the solvent extraction distribution ratio method. The medium used in all of the protonation and complexation studies was 2.0 M NaNO₃/HNO₃. Data was obtained on distribution ratio lowering (Do/D) vs. free ligand concentration measurements, and $\overline{\text{p}}$ (average proton number) data from potentiometric titrations.

The determination of the stability constants for the rare earth and actinide ion complexes with the complexant was accomplished by one of two means, depending upon the specific metal ion being complexed. For nonradioactive, or low specific activity, metal ions, such as the rare earths e.g. europium, thorium and uranium, stability constants were determined by conventional potentiometric titration techniques combined with a least-squares computer analysis. Such an approach entailed performing acid-base titrations of mixtures of the metal ion and the complexant. The titrations were performed under variable conditions, such as varying the metal-to-ligand ratio and the total metal ion concentration, to permit the precise definition of all pertinent equilibrium constants (generally 2-6 due to the structure of the complexants as polybasic acids, giving protonated complexed species of the general form MHₕL₁, wherein M is the metal ion, H is hydrogen ions, h is the number of hydrogen ions, L is the complexant and 1 is the number of the complexant ligands).

The experimental method of choice for Am and Pu was to determine the influence of the complexing agent on the distribution ratio obtained with selected liquid-liquid extractant systems. For example, the D_{Am} or D_{Pu} distribution ratio was measured using as extraction solvent bis(2-ethylhexyl) phosphoric acid (HDEHP) as a function of the concentration of the complexing ligand in the aqueous phases at varying pH. As the concentration of the complexing agent increased, the distribution ratio decreased. The decline in the distribution ratio was related mathematically to the concentration of the complexing agent, and the stability constants of the complexes was determined by least-squares fitting procedures. The polybasic nature of the thermodynamically-unstable complexing agents requires that a variety of distribution ratio experiments be performed as a function of both complexing agent concentration and pH to adequately define the nature of the metal ion complexes.

Assuming reversible extraction and complexation equilibria, the following series of equations demonstrated the effect of aqueous complexation on distribution ratios. If the distribution ratios are written as:${\text{D = [M]}}_{\text{org}} {\text{/[M]}}_{\text{aq}} \text{,}$ wherein [M]_{org} is the metal ion concentration in the organic phase and [M]_{aq} is the metal ion concentration in the aqueous phase, a distribution ratio for the metal ion in the presence and absence of the aqueous chelating agent can be defined as:${\text{D}}_{\text{o}} {\text{= [M]}}_{\text{org}} {\text{/[M}}^{\text{3+}} {\text{] and D = [M]}}_{\text{org}} {\text{/ [M]}}^{\text{3+}} {\text{] + Σ[MH}}_{\text{h}} {\text{L}}_{\text{1}} \text{],}$ where [M³⁺] is the concentration of M³⁺ ion in aqueous solution and [MHₕL₁] is the sum of the concentrations of the metal ion complexes and where MHₕL₁ are mononuclear protonated complexes of the metal ion with the complexing agent. Assuming that the metal ion complexes MHₕL₁ are not extracted into the organic phase, a "stripping factor", [(D₀/D)-1], is defined that measures the ability of the complexing agent to remove, or retain, the metal ion in the aqueous phase. The stripping factor is a measure of the amount that distribution ratios are reduced under the conditions pertaining in the aqueous phase. Generally the stripping factor applies equally to neutral and acidic extractants.

The Table 1 below shows stripping factors [(D₀/D)-1] for Europium III complexing agent concentration for the 3 diphosphonate complexants and oxalic acid. The hydrogen ion concentration of all aqueous phases was 0.1 M. The data for oxalic acid was for comparison because it is presently regarded as a very effective stripping agent, but usually is limited to tracer scale metal ion concentrations because of the low solubility of many oxalate complexes.

| STRIP FACTOR Dₒ/D-1 AT TOTAL ACID 0.1M | | | | |
|---|---|---|---|---|
| Total M ligand as added (M) | HEDPA | DHEDPA | VDPA | Oxalate |
| | | | | |
| 0.0005 | | 0.495 | | |
| 0.0008 | | 1.190 | | |
| 0.001 | 4.28 | | 1.72 | |
| 0.0012 | | 2.52 | | |
| 0.002 | 9.64 | 4.29 | 3.15 | |
| 0.003 | | 6.39 | | |
| 0.004 | 23.0 | | 6.67 | |
| 0.005 | 29.0 | 13.6 | | |
| 0.007 | 49.5 | | 12.1 | |
| 0.008 | | 24.8 | | |
| 0.010 | 88.0 | | 17.7 | |
| 0.012 | | 41.7 | | |
| 0.015 | 186 | | | |
| 0.020 | 323 | 96.4 | 42.4 | |
| 0.030 | 809 | 187 | | |
| 0.040 | 1075 | | 134 | |
| 0.050 | | | | 10.7 |
| 0.06 | 3914 | | | |
| 0.07 | | | 332 | |
| 0.10 | | | 652 | 25 |

Surprisingly and unexpectedly, the data presented in the Table show that at a given complexing agent concentration, each of the diphosphonic acids of the present invention outperformed oxalic acid by a substantial amount, and differences vary as the acidity of the aqueous phase changes.

From the data presented in the Table and from additional data found down to [H⁺] = 0.01 M (hydrogen ion concentration) various aqueous equilibria were derived , with different values of h and 1 in the complexes of formula MHₕL₁.

The derived equilibrium coefficients are presented in TABLE II, wherein it is noted that four equilibria are required to fit the Eu-VDPA date whereas five equilibria are necessary to fit the Eu-HEDPA data.

**TABLE II**

| Log Equilibrium Coefficients | | | |
|---|---|---|---|
| Equilibria | Complex | Eu-VDPA | Eu-HEDPA |
| β131 | EuH₃L⁺ | 5.71 | 6.43 |
| β121 | EuH₂L¹⁺ | 3.70 | 4.58 |
| β162 | EuH₆L₂ ¹⁺ | 9.96 | 11.47 |
| β152 | EuH₅L₂ | ---- | 9.76 |
| β142 | EuH₄L₂ ¹⁻ | 6.33 | ---- |
| β183 | EuH₈L₃ ¹⁻ | ---- | 14.56 |

Therefore, for the Eu-HEDPA system, 1:3 complexes, i.e., the stoichiometric ratio of metal to complexing agent found in the metal ion complex, are observed, whereas for VDPA, the metal to complexing agent stoichiometry apparently does not exceed 1:2.

The acid dissociation constants and the metal ion stability constants of the complexants can be used as guidance for the use of the complexants as hold back or stripping reagents. Such a correlation is important because normally it is not possible to verify experimentally all the possible conditions wherein the complexant can be utilized.

In each case above with the Eu (III), organic solutions of Eu(III) in HEDEHP were mixed with aqueous solutions of varying concentration of each complexant to strip Eu from the organic phase into the aqueous phase. The aqueous and organic phases were separated and analysed and the stripping factors determined.

The aqueous solutions of the Eu diphosphonate complexes of VDPA and DHEDPA in 8M nitric acid were boiled overnight to give decomposition of complexant and release of Eu (III) ion.

### Example 11

In the general manner of Ex 4, the organic solution of Uranium (VI) nitrate in the TRUEX solvent is mixed with an aqueous solution of 1-hydroxyethane-1,1-diphosphonic acid (HEDPA) to give an organic phase and an aqueous stripped solution containing 0.1M Uranyl complex with 0.25M HEDPA, which are separated.

To the aqueous stripped solution was added hydrogen peroxide to a concentration of 4M, and sodium vanadate to a level of 10⁻³M. The solution obtained was heated to 80°C in a vessel with stirrer, condenser and sodium hydroxide scrubber and kept at that temperature with stirring for 5 hours. After about 1.5 hours, a yellow precipitate started to form and continued to form thereafter. During the heating carbon dioxide gas was driven off and collected in the scrubber. After the 5 hour heating, the suspension obtained was filtered to give a solid and filtrate which was analysed; the filtrate was free of HEDPA and other organo phosphorus compounds but contained phosphoric acid (as shown by ³¹P NMR) and acetic acid. The solid was believed to be a uranium phosphate.

## Claims

1. A method for separation of a metal ion in a medium containing said metal ion and a component to be separated therefrom, which comprises treating said medium with a readily water soluble complexant, which is either a phosphonic acid having the general formula (I) or (II): 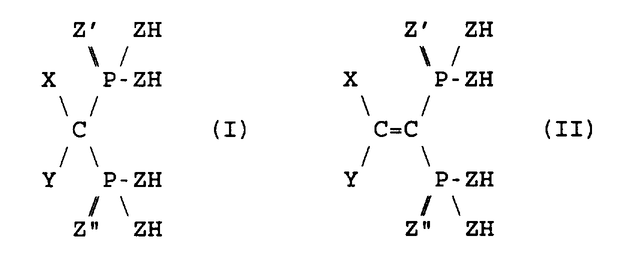 or a dimer formed by the dimerisation of two compounds of formula (I) or of two compounds of formula (II), or a salt, ester or thioester of any of such compounds which is readily water soluble,
wherein
X and Y are each independently hydrogen, halogen, SH, OH, -CO₂H, -CH₃, -CH₂CH₃, CONH₂,
-CONHR, -CONR₂, -CH₂COOR, -CH₂CONHR,
-CH₂CONR₂, -CH₂CONH₂, -CH₂COOH,
-CH₂S(O)R, -CH₂S(O₂)R,-CH₂SO₃H,
-CH₂SO₂OR, -PO(OH)₂, -CH₂PO(OH)₂,
-CH₂PO(SH)₂, -CH₂PS(SH)₂ and
-CH(PO₃H₂)₂ or a methyl group substituted by SH, OH, NH₂, Cl, Br, F, I, NO₂, CN, OR, SR or OOCR, and R represents an alkyl group having one to three carbon atoms, and
each Z, Z' and Z" are the same or different and represent oxygen or sulphur,
characterised by solubilising said water soluble complex of said metal and said complexant in an aqueous medium, separating said water soluble complex from said component and decomposing said complex by heating said aqueous medium to release the metal ion.

2. A method according to Claim 1 wherein in the complexant Z, Z', and Z" are oxygen.

3. A method according to Claim 1 or 2 wherein the complexant is of Formula II.

4. A method according to Claim 3 wherein the complexant is vinylidene-1,1-diphosphonic acid.

5. A method according to Claim 1 or 2 wherein the. complexant is of Formula I wherein X and Y are different.

6. A method according to Claim 5 wherein in the complexant X is OH and Y is as defined in Claim 1 apart from hydrogen, halogen, CH₃ or CH₂CH₃.

7. A method according to Claim 6 wherein in the complexant X is OH and Y is CH₂A wherein A is as defined in Claim 1.

8. A method according to Claim 7 wherein the complexant is 1,2-dihydroxyethyl-1,1-diphosphonic acid.

9. A method according to Claim 6 wherein in the complexant Y is CO₂H or CONH₂.

10. A method according to Claim 1 or 2 wherein the complexant is of Formula I wherein Y is hydrogen and X is hydrogen or hydroxyl.

11. A method according to Claim 1 or 2 wherein the complexant is 1-hydroxyethyl-1,1-diphosphonic acid.

12. A method according to any one of the preceding claims wherein the medium is aqueous at a pH of 10 to that of 7 M strong acid.

13. A method according to claim 12 wherein the medium is aqueous at a pH of 2 to that of 7 M strong acid.

14. A method according to any one of the preceding claims wherein the metal ion is in the II, III, IV, V, or VI oxidation state.

15. A method according to any one of Claims 1-14 wherein the metal complex is decomposed under mild conditions to release the metal ion.

16. A method according to Claim 15 wherein the metal complex is in an aqueous medium and the complexant and complex are decomposed by heating to from about 50°C up to the boiling point of the aqueous medium, for at least about 5 minutes.

17. A method according to Claim 15 or 16 wherein the metal ion complex in an aqueous medium is decomposed by contacting with a mild oxidising agent under mild oxidising conditions.

18. A method according to Claim 17 wherein the oxidising agent is hydrogen peroxide or nitric acid, a peroxycarboxylic acid, or an alkyl hydroperoxide.

19. A method according to Claim 15 wherein decomposing of the metal ion complex comprises allowing the complexant and complex to autodecompose at ambient temperature, the metal ion complex having a half-life of about 5 minutes to about 30 days.

20. A method according to any one of Claims 15-19 wherein the complex is decomposed into a product comprising phosphoric acid.

21. A method according to any one of Claims 15-20 wherein the released metal ion is in an aqueous medium and is removed therefrom by liquid-liquid extraction.

22. A method according to any one of Claims 15-20 wherein the released metal ion is in an aqueous medium and is removed therefrom by precipitation as an insoluble salt.

23. A method according to any one of Claims 1-22 wherein the medium is an aqueous solution comprising a first and second metal ion species, the complexant forms a soluble metal ion complex with the first metal ion species, and the second metal ion species is extracted from the solution with an extractant into a medium immiscible with the aqueous medium, and said aqueous solution is separated from that immiscible medium.

24. A method according to any one of Claims 1-22 wherein a non-aqueous medium containing metal ions is reacted with the complexant in an aqueous solution to form a water soluble metal complex, thereby removing metal ions from the non-aqueous medium into the aqueous solution and the non-aqueous medium is then separated from said aqueous solution.

25. A method according to any one of Claims 1-22 which comprises removing metal ions from an aqueous solution by contacting the aqueous solution with one side of a porous membrane having two sides and carrying in the pores thereof, an organic medium comprising an organic soluble complexing agent to extract metal ions from the aqueous solution into the organic complexing agent; contacting the other side of the porous membrane with an aqueous solution of a complexant as defined in any one of Claims 1-11 to extract the metals from the organic soluble complexing agent contained in the membrane pores to form a water soluble complex with said complexant from said membrane.

26. A method according to Claim 24 or 25 wherein said non-aqueous or organic medium comprises first and second metal species, the complexant forms a water soluble metal ion complex with the first metal ion species, which is removed into the aqueous solution thereby separating said first and second metal ions.

27. A method according to Claim 23 or 26 wherein the first metal ion species is plutonium and/or neptunium and the second metal ion species is americium and/or curium.

28. A method according to Claim 23 or 26 wherein the first metal ion species is an actinide metal ion and the second metal ion species is strontium and/or cesium.

29. A method according to Claim 23 or 26 wherein the first metal ion species is iron or aluminium and the second metal ion species is cobalt, and/or copper and/or nickel.

30. A method according to any one of Claims 23 and 25-29 wherein the aqueous solution containing metal ions is a radioactive nuclear waste stream, a waste brine solution or feed solution for hydrometallurgical processing.

31. A method according to any one of Claims 23-30 wherein the immiscible or non-aqueous medium comprises a hydrocarbon solvent containing an alkylamine, dialkyl amine, trialkyl amine or a neutral or acidic organophosphorous extractant.

32. A method according to any one of Claims 1-22 for purifying phosphoric acid wherein to aqueous phosphoric acid containing impurities including metal ions, which are uranium, iron, aluminium, vanadium, chromium or rare earth metal ions or a mixture thereof, is added said complexant to complex at least one of said metal ions, and phosphoric acid is extracted into an organic solvent to leave behind impure phosphoric acid containing a higher level of impurities and said metal complex, and separating said organic solvent containing phosphoric acid from said impure acid containing said complex.

33. A method according to any one of Claims 1-22 for purifying phosphoric acid wherein purified phosphoric acid and metal ions are extracted into an organic solvent from an impure mixture containing phosphoric acid and impurities including metal ions which are uranium, iron, aluminium, vanadium, chromium or rare earth metal ions, or a mixture thereof, to leave behind impure phosphoric acid containing higher levels of impurities, the organic solvent containing the purified acid and metal ions is contacted with an aqueous solution of the complexant to remove metal ions from the organic solvent as a metal complex and the organic solvent containing further purified phosphoric acid is separated from said aqueous solution of metal complex.

34. A method according to any one of Claims 1-22, wherein the medium is an aqueous solution comprising a first and second metal ion species, the complexant forms a soluble metal ion complex with the first metal ion species, and the complex and second metal species are separated on an ion exchange resin.

35. Use of a phosphonic acid, or salt, ester or thioester thereof, as defined in Claim 1 in a method according to any preceding claim, wherein said phosphonic acid is in the form of a sodium or potassium salt.

36. Use of a phosphonic acid having the Formula HOCH₂C(OH) [PS(SH)₂]₂ or CH₂=C[PS(SH)₂]₂, or a salt thereof, in a method according to any of Claims 1 to 34.

37. Use of a phosphonic acid having the Formula HOOC(HO)C(PO₃H₂)₂ or a salt thereof, in a method according to any of Claims 1 to 34.

38. Use of 1,2 dihydroxyethane-1, 1-diphosphonic acid having a ³¹P NMR chemical shift in 0.2M D₂O of 14.59 ppm relative to 85% H₃PO₄ (as external standard), or a salt thereof, in a method according to any of Claims 1 to 34.

## Patentansprüche

1. Verfahren zur Abtrennung eines Metallions in einem Medium, das das Metallion und eine Komponente enthält, von der es abgetrennt werden soll, das die Behandlung dieses Mediums mit einem leicht in Wasser löslichen Komplexbildner umfaßt, der entweder eine Phosphonsäure mit der allgemeinen Formel (I) oder (II): 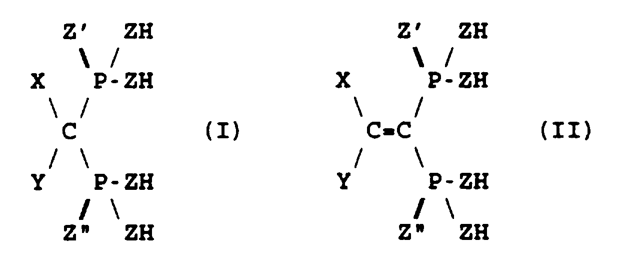 ist oder ein durch die Dimerisation von zwei Verbindungen der Formel (I) oder von zwei Verbindungen der Formel (II) gebildetes Dimer, oder ein Salz, Ester oder Thioester einer derartigen Verbindung, das leicht in Wasser löslich ist, wobei
X und Y jeweils unabhängig voneinander Wasserstoff, Halogen, SH, OH, -CO₂H, -CH₃, -CH₂CH₃, -CONH₂, -CONHR, -CONR₂, -CH₂COOR, -CH₂CONHR, -CH₂CONR₂, -CH₂CONH₂, -CH₂COOH, -CH₂S(O)R, -CH₂S(O₂)R, -CH₂SO₃H, -CH₂SO₂OR, -PO(OH)₂, -CH₂PO(OH)₂, -CH₂PO(SH)₂, -CH₂PS(SH)₂ und -CH(PO₃H₂)₂ oder eine durch SH, OH, NH₂, Cl, Br, F, I, NO₂, CN, OR, SR oder OOCR substituierte Methylgruppe sind, und
R eine Alkylgruppe mit ein bis drei Kohlenstoffatomen darstellt, und
Z, Z' und Z" jeweils gleich oder verschieden sind und Sauerstoff oder Schwefel darstellen,
gekennzeichnet durch die Solubilisierung des wasserlöslichen Komplexes des Metalles und Komplexbildner in einem wäßrigen Medium, Abtrennung des wasserlöslichen Komplexes von der Komponente und Zersetzung des Komplexes zur Freisetzung des Metallions durch Erhitzen des wäßrigen Mediums.

2. Verfahren nach Anspruch 1, wobei Z, Z' und Z" in dem Komplexbildner Sauerstoff sind.

3. Verfahren nach Anspruch 1 oder 2, wobei der Komplexbildner die Formel II hat.

4. Verfahren nach Anspruch 3, wobei der Komplexbildner Vinyliden-1,1-diphosphonsäure ist.

5. Verfahren nach Anspruch 1 oder 2, wobei der Komplexbildner die Formel I hat, wobei X und Y verschieden sind.

6. Verfahren nach Anspruch 5, wobei in dem Komplexbildner X OH ist und Y, abgesehen von Wasserstoff, Halogen, CH₃ oder CH₂CH₃, wie in Anspruch 1 definiert ist.

7. Verfahren nach Anspruch 6, wobei in dem Komplexbildner X OH ist und Y CH₂A ist, wobei A wie in Anspruch 1 definiert ist.

8. Verfahren nach Anspruch 7, wobei der Komplexbildner 1,2-Dihydroxyethyl-1,1-diphosphonsäure ist.

9. Verfahren nach Anspruch 6, wobei in dem Komplexbildner Y CO₂H oder CONH₂ ist.

10. Verfahren nach Anspruch 1 oder 2, wobei der Komplexbildner die Formel I hat, wobei Y Wasserstoff ist und X Wasserstoff oder Hydroxyl ist.

11. Verfahren nach Anspruch 1 oder 2, wobei der Komplexbildner 1-Hydroxyethyl-1,1-diphosphonsäure ist.

12. Verfahren nach einem der vorhergehenden Ansprüche, wobei das Medium wäßrig mit einem pH von 10 bis zu dem einer 7 M starken Säure ist.

13. Verfahren nach Anspruch 12, wobei das Medium wäßrig mit einem pH von 2 bis zu dem einer 7 M starken Säure ist.

14. Verfahren nach einem der vorhergehenden Ansprüche, wobei sich das Metallion in dem Oxidationszustand II, III, IV, V oder VI befindet.

15. Verfahren nach einem der Ansprüche 1-14, wobei der Metallkomplex zur Freisetzung des Metallions unter milden Bedingungen zersetzt wird.

16. Verfahren nach Anspruch 15, wobei sich der Metallkomplex in einem wäßrigem Medium befindet und der Komplexbildner und der Komplex durch Erhitzen für mindestens etwa 5 Minuten auf von etwa 50°C bis zum Siedepunkt des wäßrigen Mediums zersetzt werden.

17. Verfahren nach Anspruch 15 oder 16, wobei der Metallionenkomplex in einem wäßrigen Medium durch Kontakt mit einem milden Oxidationsmittel unter milden oxidierenden Bedingungen zersetzt wird.

18. Verfahren nach Anspruch 17, wobei das oxidierende Mittel Wasserstoffperoxid oder Salpetersäure, eine Peroxycarbonsäure oder ein Alkylhydroperoxid ist.

19. Verfahren nach Anspruch 15, wobei die Zersetzung des Metallionenkomplexes einschließt, daß man den Komplexbildner und den Komplex sich bei Umgebungstemperatur selbst zersetzen läßt, wobei der Metallionenkomplex eine Halbwertszeit von etwa 5 Minuten bis zu etwa 30 Tagen aufweist.

20. Verfahren nach einem der Ansprüche 15-19, wobei der Komplex zu einem Produkt zersetzt wird, das Phosphorsäure enthält.

21. Verfahren nach einem der Ansprüche 15-20, wobei sich das freigesetzte Metallion in einem wäßrigen Medium befindet und daraus durch Flüssig-Flüssig-Extraktion entfernt wird.

22. Verfahren nach einem der Ansprüche 15-20, wobei sich das freigesetzte Metallion in einem wäßrigen Medium befindet und daraus durch Fällung als ein unlösliches Salz entfernt wird.

23. Verfahren nach einem der Ansprüche 1-22, wobei das Medium eine wäßrige Lösung ist, die eine erste und eine zweite Metallionenspezies enthält, der Komplexbildner einen löslichen Metallionenkomplex mit der ersten Metallionenspezies bildet und die zweite Metallionenspezies aus der Lösung mit einem Extraktionsmittel in ein mit dem wäßrigen Medium unvermischbares Medium extrahiert wird und die wäßrige Lösung von diesem unvermischbaren Medium getrennt wird.

24. Verfahren nach einem der Ansprüche 1-22, wobei ein Metallionen enthaltendes nicht-wäßriges Medium mit dem Komplexbildner in einer wäßrigen Lösung zur Bildung eines wasserlöslichen Metallkomplexes umgesetzt wird, wodurch die Metallionen aus dem nicht-wäßrigen Medium in die wäßrige Lösung ausgetragen werden und das nicht-wäßrige Medium dann von der wäßrigen Lösung getrennt wird.

25. Verfahren nach einem der Ansprüche 1-22, das umfaßt die Entfernung von Metallionen aus einer wäßrigen Lösung durch Kontakt der wäßrigen Lösung mit einer Seite einer porösen Membran, die zwei Seiten aufweist und in ihren Poren ein organisches Medium mit sich führt, das ein organisch lösliches komplexbildendes Mittel zur Extraktion von Metallionen aus der wäßrigen Lösung in das organische komplexbildende Mittel enthält; den Kontakt der anderen Seite der porösen Membran mit einer wäßrigen Lösung eines wie in einem der Ansprüche 1-11 definierten Komplexbildners zur Extraktion der Metalle aus dem in den Membranporen enthaltenen organisch löslichem komplexbildenden Mittel zur Bildung eines wasserlöslichen Komplexes mit dem Komplexbildner aus der Membran.

26. Verfahren nach Anspruch 24 oder 25, wobei das nicht-wäßrige oder organische Medium erste und zweite Metallspezies enthält, der Komplexbildner mit der ersten Metallionenspezies einen wasserlöslichen Metallionenkomplex bildet, der in die wäßrige Lösung ausgetragen wird, wodurch das erste und das zweite Metallion getrennt werden.

27. Verfahren nach Anspruch 23 oder 26, wobei die erste Metallionenspezies Plutonium und/oder Neptunium und die zweite Metallionenspezies Americium und/oder Curium ist.

28. Verfahren nach Anspruch 23 oder 26, wobei die erste Metallionenspezies ein Actinidenmetallion und die zweite Metallionenspezies Strontium und/oder Cäsium ist.

29. Verfahren nach Anspruch 23 oder 26, wobei die erste Metallionenspezies Eisen oder Aluminium und die zweite Metallionenspezies Kobalt und/oder Kupfer und/oder Nickel ist.

30. Verfahren nach einem der Ansprüche 23 und 25-29, wobei die Metallionen enthaltende wäßrige Lösung ein radioaktiver nuklearer Abfallstrom, eine Abfallsolelösung oder eine Beschickungslösung für hydrometallurgische Verfahren ist.

31. Verfahren nach einem der Ansprüche 23-30, wobei das unvermischbare oder nicht-wäßrige Medium ein Kohlenwasserstofflösungsmittel einschließt, das ein Alkylamin, Dialkylamin, Trialkylamin oder ein neutrales oder saures Organophosphor enthaltendes Extraktionsmittel enthält.

32. Verfahren nach einem der Ansprüche 1-22 zur Reinigung von Phosphorsäure, wobei zu wäßriger Phosphorsäure, die Verunreinigungen enthält einschließlich Metallionen, welche Uran-, Eisen-, Aluminium-, Vanadium-, Chrom- oder Seltenerdmetallionen oder ein Gemisch davon sind, der Komplexbildner hinzugefügt wird, um zumindest eines der Metallionen komplex zu binden, und Phosphorsäure mit einem organischen Lösungsmittel extrahiert wird, um unreine Phosphorsäure zu hinterlassen, die einen höheren Gehalt an Verunreinigungen und den Metallkomplex enthält, und Trennung des organischen Lösungsmittels, das Phosphorsäure enthält, von der unreinen Säure, die den Komplex enthält.

33. Verfahren nach einem der Ansprüche 1-22 zur Reinigung von Phosphorsäure, wobei gereinigte Phosphorsäure und Metallionen aus einem unreinen Gemisch, das Phosphorsäure und Verunreinigungen einschließlich Metallionen, welche Uran-, Eisen-, Aluminium-, Vanadium-, Chrom- oder Seltenerdmetallionen oder ein Gemisch davon sind, mit einem organischen Lösungsmittel extrahiert werden, um unreine Phosphorsäure zu hinterlassen, die höhere Gehalte an Verunreinigungen enthält, das organische Lösungsmittel, das die gereinigte Säure und Metallionen enthält, mit einer wäßrigen Lösung des Komplexbildners in Kontakt gebracht wird, um Metallionen als einen Metallkomplex aus dem organischen Lösungsmittel zu entfernen und das organische Lösungsmittel, das weiterhin gereinigte Phosphorsäure enthält, von der wäßrigen Lösung des Metallkomplexes getrennt wird.

34. Verfahren nach einem der Ansprüche 1-22, wobei das Medium eine wäßrige Lösung ist, die eine erste und eine zweite Metallionenspezies enthält, der Komplexbildner einen löslichen Metallionenkomplex mit der ersten Metallionenspezies bildet und der Komplex und die zweite Metall spezies auf einem Ionenaustauscherharz getrennt werden.

35. Verwendung einer wie in Anspruch 1 definierten Phosphonsäure oder eines Salzes, Esters oder Thioesters davon in einem Verfahren nach jedem vorhergehenden Anspruch, wobei die Phosphonsäure in der Form eines Natriumoder Kaliumsalzes vorliegt.

36. Verwendung einer Phosphonsäure mit der Formel HOCH₂C(OH)[PS(SH)₂]₂ oder CH₂=C[PS(SH)₂]₂ oder eines Salzes davon in einem Verfahren nach einem der Ansprüche 1 bis 34.

37. Verwendung einer Phosphonsäure mit der Formel HOOC(HO)C(PO₃H₂)₂ oder eines Salzes davon in einem Verfahren nach einem der Ansprüche 1 bis 34.

38. Verwendung von 1,2-Dihydroxyethan-1,1-diphosphonsäure mit einer chemischen Verschiebung in der ³¹P-NMR in 0,2 M D₂O von 14,59 ppm relativ zu 85%iger H₃PO₄ (als äußerem Standard) oder eines Salzes davon in einem Verfahren nach einem der Ansprüche 1 bis 34.

## Revendications

1. Procédé de séparation d'un ion métallique dans un milieu contenant ledit ion métallique et un composant à séparer à partir de là, qui comprend l'étape de traiter ledit milieu avec un complexant facilement hydrosoluble, qui est soit un acide phosphonique ayant la formule générale (I) ou (II): 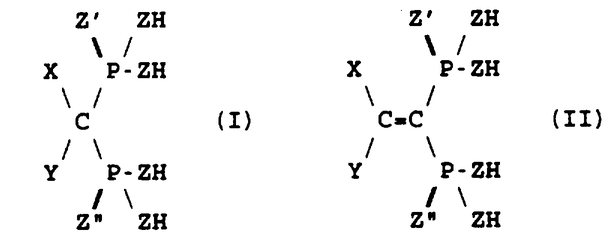 soit un dimère formé par la dimérisation de deux composés de formule (I) ou de deux composés de formule (II), ou un sel, un ester ou un thioester de n'importe quel composé de ce type qui est facilement hydrosoluble,
dans lesquelles
X et Y sont chacun indépendamment un hydrogène, un halogène, SH, OH,-CO₂H, -CH₃, -CH₂CH₃, CONH₂, -CONHR, -CONR₂, -CH₂COOR, -CH₂CONHR, -CH₂CONR₂,-CH₂CONH₂, -CH₂COOH, -CH₂S(O)R, -CH₂S(O₂)R, -CH₂SO₃H, -CH₂SO₂OR, -PO(OH)₂,-CH₂PO(OH)₂, -CH₂PO(SH)₂, -CH₂PS(SH)₂ et -CH(PO₃H₂)₂ ou un groupe méthyle substitué par SH, OH, NH₂, Cl, Br, F, I, NO₂, CN, OR, SR ou OOCR, et R représente un groupe alkyle comportant de un à trois atomes de carbone, et
chacun des Z, Z' et Z" sont les même ou sont différents et représentent l'oxygène ou le soufre,
caractérisé par la solubilisation dudit complexe hydrosoluble dudit métal et dudit complexant dans un milieu aqueux, la séparation dudit complexe hydrosoluble dudit composant et la décomposition dudit complexe en chauffant ledit milieu aqueux pour libérer l'ion métallique.

2. Procédé selon la Revendication 1 dans lequel Z, Z', et Z" dans le complexant sont de l'oxygène.

3. Procédé selon la Revendication 1 ou 2 dans lequel le complexant est de Formule II.

4. Procédé selon la Revendication 3 dans lequel le complexant est l'acide vinylidène-1,1-diphosphonique.

5. Procédé selon la Revendication 1 ou 2 dans lequel le complexant est de Formule I dans laquelle X et Y sont différents.

6. Procédé selon la Revendication 5 dans lequel, dans le complexant, X est OH et Y est tel que défini dans la Revendication 1 sauf l'hydrogène, un halogène, CH₃ ou CH₂CH₃.

7. Procédé selon la Revendication 6 dans lequel, dans le complexant, X est OH et Y est CH₂A dans lequel A est tel que défini dans la Revendication 1.

8. Procédé selon la Revendication 7 dans lequel le complexant est l'acide 1,2-dihydroxyéthyl-1,1-diphosphonique.

9. Procédé selon la Revendication 6 dans lequel, dans le complexant, Y est CO₂H ou CONH₂.

10. Procédé selon la Revendication 1 ou 2 dans lequel le complexant est de Formule I dans laquelle Y est l'hydrogène et X est l'hydrogène ou un hydroxyle.

11. Procédé selon la Revendication 1 ou 2 dans lequel le complexant est l'acide 1-hydroxyéthyl-1,1-diphosphonique.

12. Procédé selon l'une quelconque des revendications précédentes dans lequel le milieu est aqueux à un pH de 10 à celui d'un acide fort 7 M.

13. Procédé selon la revendication 12 dans lequel le milieu est aqueux à un pH de 2 à celui d'un acide fort 7 M.

14. Procédé selon l'une quelconque des revendications précédentes dans lequel l'ion métallique est dans le degré d'oxydation II, III, IV, V, ou VI.

15. Procédé selon l'une quelconque des Revendications 1-14 dans lequel le complexe métallique est décomposé dans des conditions douces pour libérer l'ion métallique.

16. Procédé selon la Revendication 15 dans lequel le complexe métallique est dans un milieu aqueux et le complexant et le complexe sont décomposés en chauffant à de environ 50°C au point d'ébullition du milieu aqueux, durant au moins environ 5 minutes.

17. Procédé selon la Revendication 15 ou 16 dans lequel le complexe d'ion métallique dans un milieu aqueux est décomposé par la mise en contact avec un agent oxydant doux dans des conditions oxydantes douces.

18. Procédé selon la Revendication 17 dans lequel l'agent oxydant est le peroxyde d'hydrogène ou l'acide nitrique, un acide peroxycarboxylique, ou un alkylhydroperoxyde.

19. Procédé selon la Revendication 15 dans lequel la décomposition du complexe d'ion métallique comprend la mise à autodécomposer du complexant et du complexe à température ambiante, le complexe d'ion métallique ayant une demi-vie d'environ 5 minutes à environ 30 jours.

20. Procédé selon l'une quelconque des Revendications 15-19 dans lequel le complexe est décomposé en un produit qui comprend de l'acide phosphorique.

21. Procédé selon l'une quelconque des Revendications 15-20 dans lequel l'ion métallique libéré est dans un milieu aqueux et est éliminé à partir de là par extraction liquide-liquide.

22. Procédé selon l'une quelconque des Revendications 15-20 dans lequel l'ion métallique libéré est dans un milieu aqueux et est éliminé à partir de là par précipitation sous forme de sel insoluble.

23. Procédé selon l'une quelconque des Revendications 1-22 dans lequel le milieu est une solution aqueuse qui comprend une première et deuxième espèce d'ion métallique, le complexant forme un complexe soluble d'ion métallique avec la première espèce d'ion métallique, et la deuxième espèce d'ion métallique est extraite de la solution avec un agent d'extraction dans un milieu non miscible avec le milieu aqueux, et ladite solution aqueuse est séparée de ce milieu non miscible.

24. Procédé selon l'une quelconque des Revendications 1-22 dans lequel un milieu non-aqueux contenant des ions métalliques est fait réagir avec le complexant en solution aqueuse pour former un complexe de métal hydrosoluble, éliminant de cette façon les ions métalliques du milieu non-aqueux vers la solution aqueuse et le milieu non-aqueux est ensuite séparé de ladite solution aqueuse.

25. Procédé selon l'une quelconque des Revendications 1-22 qui comprend l'élimination d'ions métalliques d'une solution aqueuse par la mise en contact de la solution aqueuse avec un côté d'une membrane poreuse ayant deux côtés et portant dans les pores de celle-ci, un milieu organique qui comprend un agent de complexation organique soluble pour extraire des ions métalliques de la solution aqueuse vers les agents de complexation organiques; la mise en contact de l'autre côté de la membrane poreuse avec une solution aqueuse d'un complexant tel que défini dans l'une quelconque des Revendications 1-11 pour extraire les métaux des agents de complexation organiques solubles contenus dans les pores de la membrane pour former un complexe hydrosoluble avec ledit complexant de ladite membrane.

26. Procédé selon la Revendication 24 ou 25 dans lequel ledit milieu non-aqueux ou organique comprend la première et la deuxième espèce de métal, le complexant forme un complexe hydrosoluble d'ion métallique avec la première espèce d'ion métallique, qui est éliminée vers la solution aqueuse séparant de cette façon lesdits premier et deuxième ions métalliques.

27. Procédé selon la Revendication 23 ou 26 dans lequel la première espèce d'ion métallique est le plutonium et/ou le neptunium et la deuxième espèce d'ion métallique est l'américium et/ou le curium.

28. Procédé selon la Revendication 23 ou 26 dans lequel la première espèce d'ion métallique est un ion métallique d'actinide et la deuxième espèce d'ion métallique est le strontium et/ou le césium.

29. Procédé selon la Revendication 23 ou 26 dans lequel la première espèce d'ion métallique est le fer ou l'aluminium et la deuxième espèce d'ion métallique est le cobalt, et/ou le cuivre et/ou le nickel.

30. Procédé selon l'une quelconque des Revendications 23 et 25-29 dans lequel la solution aqueuse contenant des ions métalliques est un courant de déchets nucléaires radioactifs, une solution de saumure usée ou une solution d'alimentation pour traitement hydrometallurgique.

31. Procédé selon l'une quelconque des Revendications 23-30 dans lequel le milieu non miscible ou non-aqueux comprend un solvant hydrocarbure contenant une alkylamine, une dialkylamine, une trialkylamine ou un agent d'extraction organophosphoré neutre ou acide.

32. Procédé selon l'une quelconque des Revendications 1-22 pour purifier l'acide phosphorique dans lequel à l'acide phosphorique aqueux contenant des impuretés comprenant des ions métalliques, qui sont l'uranium. le fer, l'aluminium, le vanadium, le chrome ou les ions métalliques de terre rares ou un mélange de ceux-ci, est ajouté ledit complexant pour complexer au moins l'un desdits ions métalliques, et l'acide phosphorique est extrait dans un solvant organique pour laisser l'acide phosphorique impur contenant un taux élevé d'impuretés et ledit complexe métallique, et séparer ledit solvant organique contenant de l'acide phosphorique dudit acide impur contenant ledit complexe.

33. Procédé selon l'une quelconque des Revendications 1-22 pour purifier l'acide phosphorique, dans lequel de l'acide phosphorique purifié et des ions métalliques sont extraits dans un solvant organique à partir d'un mélange impur contenant de l'acide phosphorique et des impuretés y compris des ions métalliques qui sont l'uranium, le fer, l'aluminium, le vanadium, le chrome ou les ions métalliques de terre rares, ou un mélange de ceux-ci, pour laisser l'acide phosphorique impur contenant des teneurs supérieures d'impuretés, le solvant organique contenant l'acide purifié et les ions métalliques est mis en contact avec une solution aqueuse du complexant pour éliminer les ions métalliques du solvant organique sous la forme d'un complexe métallique et le solvant organique contenant encore de l'acide phosphorique purifié est séparé de ladite solution aqueuse de complexe métallique.

34. Procédé selon l'une quelconque des Revendications 1-22, dans lequel le milieu est une solution aqueuse qui comprend une première et deuxième espèce d'ion métallique, le complexant forme un complexe d'ion métallique soluble avec la première espèce d'ion métallique, et le complexe et la deuxième espèce de métal sont séparés sur une résine échangeuse d'ions.

35. Utilisation d'un acide phosphonique, ou d'un sel, d'un ester ou d'un thioester de celui-ci, tel que défini dans la Revendication 1 dans un procédé selon l'une quelconque des revendications précédentes, dans lequel ledit acide phosphonique est sous la forme d'un sel de sodium ou de potassium.

36. Utilisation d'un acide phosphoni que ayant la formule HOCH₂C(OH)[PS(SH)₂]₂ ou CH₂=C[PS(SH)₂]₂, ou un sel de ceux-ci, dans un procédé selon l'une quelconque des Revendications 1 à 34.

37. Utilisation d'un acide phosphoni que ayant la formule HOOC(HO)C(PO₃H₂)₂ ou un sel de celui-ci, dans un procédé selon l'une quelconque des Revendications 1 à 34.

38. Utilisation d'acide 1,2-dihydroxyéthane-1,1-diphosphonique ayant un déplacement chimique en RMN du ³¹P dans 0,2 M D₂O de 14,59 ppm par rapport à du H₃PO₄ à 85% (en tant que référence externe), ou d'un sel de celui-ci, dans un procédé selon l'une quelconque des Revendications 1 à 34.
